(19) **Europäisches Patentamt**
**European Patent Office**
**Office européen des brevets**

(11) **EP 3 902 363 A1**

(12) **EUROPEAN PATENT APPLICATION**
published in accordance with Art. 153(4) EPC

(43) Date of publication:
**27.10.2021 Bulletin 2021/43**

(21) Application number: **20748047.6**

(22) Date of filing: **03.02.2020**

(51) Int Cl.:
*H04W 72/12* (2009.01)        *H04L 5/00* (2006.01)

(86) International application number:
**PCT/CN2020/074176**

(87) International publication number:
**WO 2020/156558 (06.08.2020 Gazette 2020/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.02.2019 CN 201910106580**

(71) Applicant: **Sony Group Corporation**
**108-0075 Tokyo (JP)**

(72) Inventors:
- **ZHAO, Xiaoyu**
  **Beijing 100084 (CN)**
- **GUO, Xin**
  **Beijing 100028 (CN)**
- **CHEN, Wei**
  **Beijing 100084 (CN)**

(74) Representative: **D Young & Co LLP**
**120 Holborn**
**London EC1N 2DY (GB)**

(54) **RECEIVING DEVICE, TRANSMITTING DEVICE, COMMUNICATION METHOD, AND MEDIUM**

(57)     The disclosure is related to a receiving device, a transmitting device, a communication method, and medium. The receiving device comprises processing circuitry configured to: receive a reference signal from a transmitting device, wherein the reference signal carries a reference sequence generated based on an orthogonal sequence and a random sequence associated with the transmitting device; and identify the transmitting device based on the reference signal.

Fig. 2

## Description

CLAIM OF PRIORITY

This application claims the priority of the Chinese Patent Application titled " RECEIVING DEVICE, TRANSMITTING DEVICE, COMMUNICATION METHOD AND MEDIUM", Application No. 201910106580.5, filed on February 2, 2019, the entire contents of which are incorporated herein by reference.

TECHNICAL FIELD

The present disclosure relates to the field of wireless communication, and in particular, to a receiving device, a transmitting device, a communication method and a medium for wireless communication.

BACKGROUND

In the past mobile communication systems, Orthogonal Multiple Access (OMA) technologies such as CDMA, TDMA, FDMA, OFDMA, etc. have been widely used. As more and more devices need to access mobile communication network, and as the requirements for communication reliability and latency of these devices continue to increase, traditional orthogonal multiple access technologies can no longer meet these demands. Therefore, Non-orthogonal Multiple Access (NOMA) technology has been proposed so as to utilize spectrum resources more efficiently, improve communication reliability, and reduce communication latency.

Different from the orthogonal multiple access technology, in the non-orthogonal multiple access technology, resources for users are not orthogonal from each other (there may be multiple users sharing the same time-frequency resource block). However, by adopting corresponding codebook design and user resource allocation pattern, signals of individual users can be effectively separated and decoded. In non-orthogonal multiple access technology, the receiver generally adopts an iterative loop structure. First, the receiver realizes the reception of a certain user's signals through user detecting, demodulating and channel decoding. Then, the receiver uses the user's signal to eliminate the interference of the user's signal in the original received signal, and decodes another user's signal. The receiver can realize the reception of signals from all users by repeating the above process.

SUMMARY

The inventor of the present disclosure discovered that in the NOMA system, a user's signal is randomly transmitted. Therefore, the receiver cannot determine which user or users have transmitted data before the decoding is completed. In this case, in order to achieve reliable communication, the receiver will perform a decoding process once for each user, resulting in an increase in the number of cyclic decoding, that is, an increase in decoding complexity. In addition, the increase in decoding complexity leads to an increase in latency.

In order to solve one or more of the above issues, the present disclosure proposes to transmit a reference signal from a transmitting device for identifying the transmitting device, and then to identify the transmitting device based on the reference signal at a receiving device, thereby reducing the number of cyclic decoding on data, and reducing latency of decoding.

The present disclosure provides a receiving device comprising processing circuitry. The processing circuitry is configured to receive a reference signal from a transmitting device, wherein the reference signal carries a reference sequence generated based on an orthogonal sequence and a random sequence associated with the transmitting device; and identify the transmitting device based on the reference signal.

The present disclosure provides a transmitting device comprising processing circuitry. The processing circuitry is configured to generate a reference sequence based on an orthogonal sequence and a random sequence associated with the transmitting device; generate a reference signal carrying the reference sequence; and transmit the reference signal to a receiving device.

The present disclosure provides a communication method. The method comprises: receiving a reference signal from a transmitting device, wherein the reference signal carries a reference sequence generated based on an orthogonal sequence and a random sequence associated with the transmitting device; and identifying the transmitting device based on the reference signal.

The present disclosure provides a communication method. The method comprises: generating a reference sequence based on an orthogonal sequence and a random sequence associated with a transmitting device; generating a reference signal carrying the reference sequence; and transmitting the reference signal to a receiving device.

The present disclosure provides a non-transitory computer-readable storage medium having instructions stored thereon, which when executed by a processor causes the processor to perform the method of the present disclosure.

DRAWINGS

A better understanding of the present disclosure can be obtained when following detailed description of the embodiments is considered in conjunction with accompanying drawings. The same or similar reference numerals are used in the drawings to refer to the same or similar parts. The drawings, together with the specific description below, are included in and forms part of the specification, and are used to illustrate the embodiments of the present disclosure and explain the principles and advantages of the present disclosure.

Figure 1 illustrates a communication system according to some embodiments of the present disclosure.

Figure 2 illustrates an apparatus that can be operated as a receiving device or a transmitting device according to some embodiments of the present disclosure.

Figure 3 illustrates a processing flow of a communication system according to some embodiments of the present disclosure.

Figure 4 illustrates a receiver for decoding a data signal according to some embodiments of the present disclosure.

Figure 5 illustrates a processing flow of generating a reference sequence in some embodiments of the present disclosure.

Figure 6 illustrates a processing flow of generating a reference sequence in some embodiments of the present disclosure.

Figure 7 illustrates a processing flow of identifying a transmitting device based on a reference signal in some embodiments of the present disclosure.

Figure 8 illustrates a communication method performed by a receiving device in some embodiments of the present disclosure.

Figure 9 illustrates a communication method performed by a transmitting device in some embodiments of the present disclosure.

Figure 10 is a block diagram illustrating an example of a schematic configuration of a computing device to which the technology of the present disclosure can be applied.

Figure 11 is a block diagram illustrating a first example of a schematic configuration of a gNB to which the technology of the present disclosure can be applied.

Figure 12 is a block diagram illustrating a second example of a schematic configuration of a gNB to which the technology of the present disclosure can be applied.

Figure 13 is a block diagram illustrating an example of a schematic configuration of a smart phone to which the technology of the present disclosure can be applied.

Figure 14 is a block diagram illustrating an example of a schematic configuration of a car navigation device to which the technology of the present disclosure can be applied.

DETAILED DESCRIPTION

Hereinafter, preferred embodiments of the present disclosure will be described in detail with reference to the accompanying drawings. Note that in the specification and drawings, the same reference numerals are used to denote structural elements having substantially the same function and structure, and repeated descriptions of these structural elements are omitted.

The description will be made in the following order:

1. System Overview

2. Processing flow

3. Application examples

<1. System Overview>

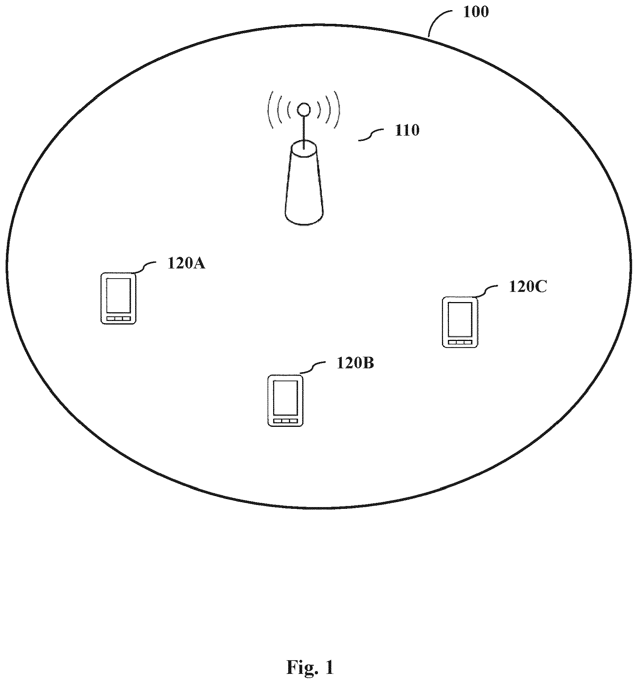

First, a communication system of some embodiments of the present disclosure will be briefly described. Figure 1 illustrates a communication system 100 according to some embodiments of the present disclosure. In Figure 1, a receiving device 110 communicates with transmitting devices 120A, 120B, and 120C. The transmitting devices 120A, 120B, and 120C access the receiving device 110 through NOMA manner to transmit signals to the receiving device 110.

In some embodiments of the present disclosure, the receiving device 110 is configured to be a base station, and the transmitting devices 120A, 120B, and 120C are configured to be terminal devices. The transmitting devices 120A, 120B, and 120C transmit uplink signals to the receiving device 110 through NOMA manner.

In some embodiments of the present disclosure, the receiving device 110 and the transmitting devices 120A, 120B, and 120C are all configured to be terminal devices. For example, the receiving device 110 and the transmitting devices 120A, 120B, and 120C can communicate directly. Or, while the receiving device 110 and the transmitting devices 120A, 120B, and 120C are communicating with a base station, the transmitting devices 120A, 120B, and 120C can communicate with the receiving device 110 in NOMA manner via a sidelink. For example, the receiving device 110 is configured to a leading vehicle in a Platooning, and the transmitting devices 120A, 120B, and 120C are configured to follower vehicles in the Platooning, the follower vehicles communicating with the lead vehicle in NOMA manner.

The exemplary communication system of some embodiments of the present disclosure has been described above. Note that although 3 transmitting devices are shown in Figure 1, the number of transmitting devices in the embodiments of the present disclosure is not limited to 3, and may be any number of more than 2. Further, in addition to the foregoing scenarios, the communication system 100 may also be used in scenarios such as cooperative awareness, cooperative sensing, cooperative maneuver, intelligent transportation, and teleoperated driving etc.

Hereinafter, an exemplary structure of a receiving device and a transmitting device according to some embodiments of the present disclosure will be briefly described. In addition, for the convenience of description, when there is no need to distinguish between multiple transmitting devices, the reference number 120 will be used to collectively denote the transmitting devices.

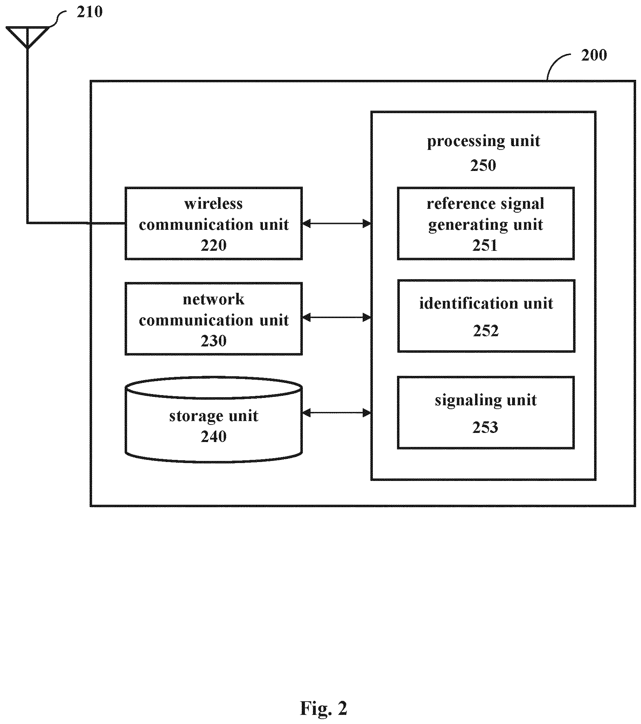

Figure 2 illustrates an apparatus 200 that can be operated as a receiving device or a transmitting device according to some embodiments of the present disclosure. In reference to Figure 2, the apparatus 200 comprises an antenna unit 210, a wireless communication unit 220, a network communication unit 230, a storage unit 240, and a processing unit 250.

The antenna unit 210 receives a radio signal, and outputs the received radio signal to the wireless communication unit 220. The antenna unit 210 also transmits the transmission signal output from the wireless communication unit 220.

The wireless communication unit 220 communicates with a terminal device or a base station in a wireless manner. The network communication unit 230 communicates with core network nodes or accesses the Internet in a wired or wireless manner. The storage unit 240 stores programs and data for operating the apparatus 200. In some embodiments of the present disclosure, the apparatus 200 may not have the network communication unit 230. For example, in a case that the apparatus 200 operates as a terminal device, it may not have a network communication unit.

The processing unit 250 provides various functions of the apparatus 200. In some embodiments of the present disclosure, the processing unit 250 includes a reference signal generating unit 251, an identification unit 252, and a signaling unit 253. The reference signal generating unit 251 performs a reference signal generating operation, the identification unit 252 identifies a transmitting device that transmitted a signal, and the signaling unit 153 performs a signaling interaction function. The reference signal generating unit 251, the identification unit 252, and the signaling unit 253 may be hardware circuits or software modules. In a case where the apparatus 200 operates as a transmitting device, the apparatus 200 may not have the identification unit 252, or the identification unit 252 may be disabled.

The processing unit 250 may be realized by processing circuitry. The processing circuitry can be configured to directly perform functions of the processing unit 250, or control other components and/or external components of the apparatus 200 to perform functions of the processing unit 250. In some embodiments of the present disclosure, the processing circuitry is in the form of a general-purpose processor, or a dedicated processing circuitry, such as an ASIC. In some embodiments of the present disclosure, the processing circuitry can be constructed by a circuit (hardware) or a central processing device (such as a central processing unit (CPU)).

In some embodiments of the present disclosure, the apparatus 200 may not include one or more of the antenna unit 210, the wireless communication unit 220, the network communication unit 230, and the storage unit 240. For example, the apparatus 200 can be configured to be a chip (such as an integrated circuit module comprising a single wafer) or a hardware module, which controls external antenna unit, wireless communication unit, network communication unit, and storage unit to perform certain operations.

<2. Processing flow>

The communication system of some embodiments of the present disclosure is exemplarily described above. Next, processing flows of some embodiments of the present disclosure will be described.

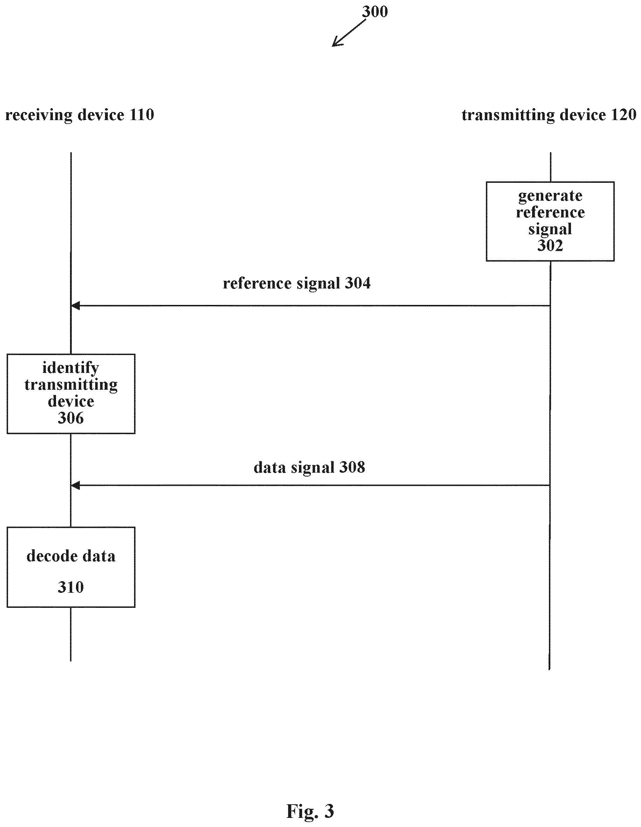

Figure 3 illustrates a processing flow 300 of the communication system according to some embodiments of the present disclosure.

In step 302, the transmitting device 120 generates a reference signal. For example, the transmitting device 120 generates a reference sequence (which may be referred to herein as a reference sequence for identifying a transmitting device) based on an orthogonal sequence and a random sequence associated with the transmitting device 120, and then generates a reference signal carrying the reference sequence (which may be referred to herein as a reference signal for identifying a transmitting device).

In step 304, the transmitting device 120 transmits the reference signal to the receiving device 110, and the receiving device 110 receives the reference signal from the transmitting device 120.

In step 306, the receiving device 110 identifies the transmitting device based on the received reference signal, that is, one or more transmitting devices that transmit the reference signal.

In step 308, the transmitting device 120 that has transmitted the reference signal transmits a data signal to the receiving device 110, and the receiving device 110 receives the data signal from the transmitting device 120 that has transmitted the reference signal.

In step 310, the receiving device 110 decodes the data signal for the transmitting device identified in step 306.

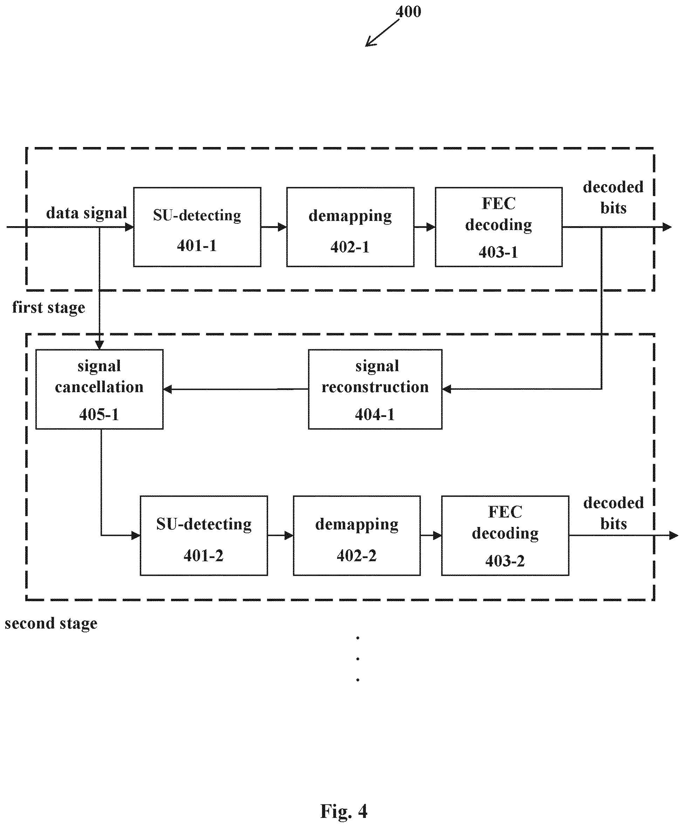

Figure 4 illustrates a receiver 400 for decoding a data signal according to some embodiments of the present disclosure.

As shown in Figure 4, the data signal is decoded in multiple stages in the receiver 400, the first stage is decoded for user 1, and the second stage is decoded for user 2, and so on. In the first stage, Single-User detecting (SU-detecting) 401-1, demapping 402-1, and FEC decoding 403-1 are sequentially performed on the data signal to obtain the decoded bits of user 1. In the second stage, the data signal and the decoded bits of user 1 after signal reconstruction 404-1 are subjected to signal cancellation 405-1, and then the resulting signal sequentially is performed Single-User detecting (SU-detecting) 401-2, demapping 402-2, FEC decoding 403-2, to obtain the decoded bits of user 2. And so on, the decoded bits of other users can be obtained.

In Figure 4, each user can be regarded as one transmitting device. The receiving device determines which transmitting device or devices will transmit the subsequent data signal by identifying the transmitting device that transmitted the reference signal. Therefore, when decoding the data signal, the receiving device does not need to perform cyclic decoding for all transmitting devices in the communication system, but only needs to perform cyclic decoding for identified transmitting devices. Thereby, the number of cyclic decoding at the receiving device is reduced, the decoding complexity is reduced, and the decoding latency is reduced.

Reference sequence

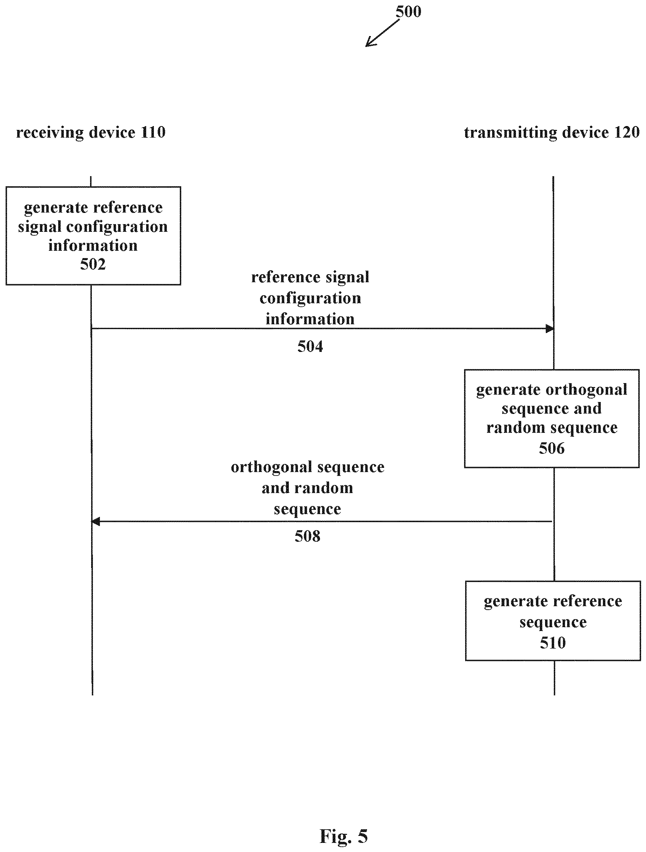

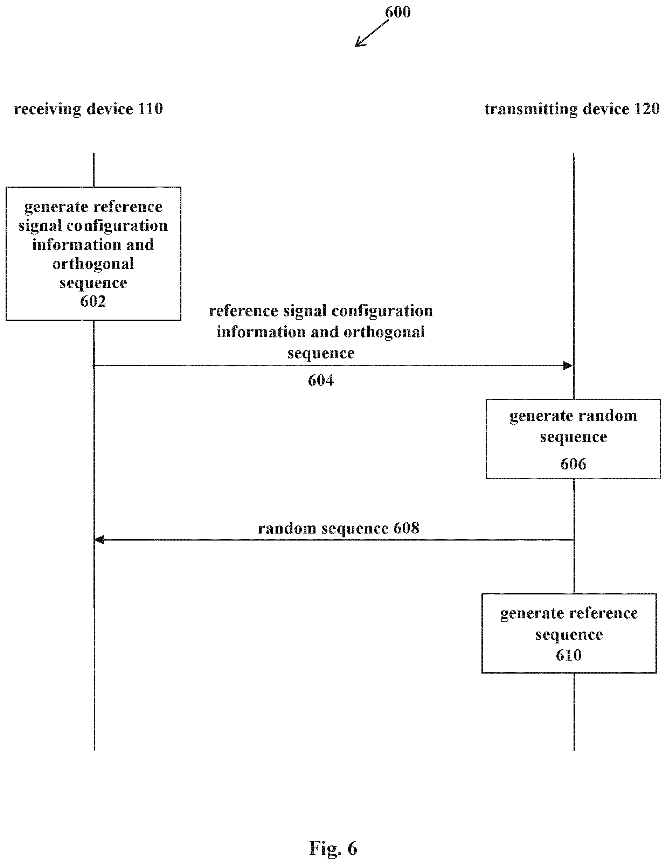

In some embodiments of the present disclosure, a reference sequence is generated based on an orthogonal sequence and a random sequence. The orthogonal sequence can be transmitted to a transmitting device after generated by a receiving device, or generated directly by the transmitting device. These two cases will be described in detail below with reference to Figures 5 and 6.

Figure 5 illustrates a processing flow 500 of generating a reference sequence in some embodiments of the present disclosure. In step 502, the receiving device 110 generates reference signal configuration information for the transmitting device 120. The reference signal configuration information includes one or more of a type of the orthogonal sequence, a length of the orthogonal sequence, a extension method of the orthogonal sequence, a generator of the orthogonal sequence, random sequence information, a type of generating operation of the reference sequence, and a type of the reference sequence, and other information.

The types of orthogonal sequences include M sequence, PN sequence, Walsh sequence and the like. The complexity of generating operations for different types of orthogonal sequences is different. In some embodiments of the present disclosure, the receiving device 110 determines a type of the orthogonal sequence based on a real-time demand level of the transmitting device 120. Specifically, a low complexity orthogonal sequence is selected for the transmitting device 120 with a high level of real-time demand (i.e., requiring low latency). In addition, different types of orthogonal sequences have different code distances. In some embodiments of the present disclosure, the receiving device 110 determines a type of orthogonal sequence based on a reliability demand level of the transmitting device 120. Specifically, an orthogonal sequence with a large code distance is selected for the transmitting device 120 with a high level of reliability demand (i.e., requiring high reliability). The receiving device 110 may determine its real-time demand level or reliability demand level according to the type of the transmitting device 120. Alternatively, the transmitting device 120 may transmit its own real-time demand level or reliability demand level to the receiving device 110.

In some embodiments of the present disclosure, the receiving device 110 determines a length of the orthogonal sequence based on a real-time demand level of the transmitting device 120. Specifically, a shorter orthogonal sequence is selected for the transmitting device 120 with a high level of real-time demand (i.e., requiring low latency). In some embodiments of the present disclosure, the receiving device 110 determines a type of the orthogonal sequence based on a number of transmitting devices connected to the receiving device 110. Specifically, when the number of transmitting devices connected to the receiving device 110 is large, a longer orthogonal sequence is selected to better distinguish between these transmitting devices.

The extension method of an orthogonal sequence includes zero padding at the head, middle or tail of the orthogonal sequence. The generator of the orthogonal sequence indicates whether the orthogonal sequence is generated by a receiving device or a transmitting device. The random sequence information includes information for generating a random sequence, for example a random seed. The type of the reference sequence indicates whether the reference sequence is a reference sequence for identifying a transmitting device or a traditional reference sequence. A reference sequence for identifying a transmitting device refers to a reference sequence generated according to an embodiment of the present disclosure.

The types of generating operation of the reference sequence include scrambling operations (comprising bitwise XOR of an orthogonal sequence and a random sequence) and encrypting operations. Encrypting operations can include a variety of different encryption algorithms, such as AES and SNOW3G. Different types of generating operations have different complexity. In some embodiments of the present disclosure, the receiving device 110 determines a type of generating operation of the reference sequence based on a real-time demand level of the transmitting device 120. Specifically, a generating operation with low complexity is selected for the transmitting device 120 with a high level of real-time demand (i.e., requiring low latency). In some embodiments of the present disclosure, the receiving device 110 determines a type of generating operation of the reference sequence based on a security demand level of the transmitting device 120. Specifically, a generating operation with high security (for example, an encryption algorithm that is not easy to be cracked) is selected for the transmitting device 120 with a high level of security demand (i.e., requiring high security). The receiving device 110 may determine its security demand level according to the type of the transmitting device 120. Alternatively, the transmitting device 120 may transmit its own security demand level to the receiving device 110.

In step 504, the receiving device 110 transmits the reference signal configuration information to the transmitting device 120, and the transmitting device 120 receives the reference signal configuration information from the receiving device 110. In some embodiments of the present disclosure, the reference signal configuration information may be stored in the receiving device 110 and the transmitting device 120 in advance. In some embodiments of the present disclosure, one or more items in the reference signal configuration information may be generated by the transmitting device 120 and notified of the receiving device through signaling. Therefore, steps 502 and 504 are not necessary.

In step 506, the transmitting device 120 generates an orthogonal sequence and a random sequence based on the reference signal configuration information. For example, the transmitting device 120 generates an orthogonal sequence with a length or a type specified in the reference signal configuration information. In some embodiments of the present disclosure, the transmitting device 120 randomly selects one orthogonal sequence from a plurality of generated orthogonal sequences or selects an orthogonal sequence that meets specific requirements based on the reference signal configuration information. For example, the specific requirement may be that the code distance from the specific orthogonal sequence is greater than a code distance threshold. The specific orthogonal sequence and the code distance threshold can be specified in the reference signal configuration information.

In step 508, the transmitting device 120 transmits the generated orthogonal sequence and random sequence to the receiving device 110, and the receiving device 110 receives the orthogonal sequence and the random sequence from the transmitting device 120. The receiving device 110 may store the received orthogonal sequence and random sequence in association with the identifier of the transmitting device 120 for identification of the transmitting device 120.

In step 510, the transmitting device 120 generates a reference sequence based on the generated orthogonal sequence and random sequence. In some embodiments of the present disclosure, the transmitting device 120 obtains the extended orthogonal sequence with the same length as the random sequence by extending the orthogonal sequence (padded zeros at the head, middle, or tail of the orthogonal sequence), and generates the reference sequence by performing XOR operation on the extended orthogonal sequence with the random sequence. In some embodiments of the present disclosure, the transmitting device 120 generates a reference sequence by performing a scrambling operation on an orthogonal sequence with a random sequence. In some embodiments of the present disclosure, the transmitting device 120 generate a reference sequence by performs an encrypting operation on a random sequence with an orthogonal sequence. For example, the transmitting device 120 performs an encrypting operation on a random sequence with an orthogonal sequence as a key.

In some embodiments of the present disclosure, the transmitting device 120 transmits multiple orthogonal sequences and multiple random sequences to the receiving device 110. The receiving device 120 selects one orthogonal sequence and one random sequence from the multiple orthogonal sequences and multiple random sequences after receiving the multiple orthogonal sequences and multiple random sequences, and informs the transmitting device 120 of the selected orthogonal sequence and random sequence through signaling (not shown in Figure 5). The transmitting device 120 generates a reference sequence based on the orthogonal sequence and the random sequence selected by the receiving device 120.

Figure 6 illustrates a processing flow 600 of generating a reference sequence in some embodiments of the present disclosure.

In step 602, the receiving device 110 generates reference signal configuration information and an orthogonal sequence for the transmitting device 120. The reference signal configuration information includes one or more of a length of the orthogonal sequence, an extension method of the orthogonal sequence, random sequence information, a type of generating operation of the reference sequence, and other information. In some embodiments of the present disclosure, one or more items in the reference signal configuration information may be generated by the transmitting device 120 and notified of the receiving device through signaling.

In some embodiments of the present disclosure, the receiving device 110 selects an orthogonal sequence for two transmitting devices based on a similarity level between data arrival processes of the two transmitting devices, such that a code distance between the orthogonal sequences for the two transmitting devices corresponds to the similarity level.

The data arrival process refers to statistical information of the number of data arrivals (for example, the number of data packets) of each transmitting device within multiple time windows. The statistical information can be expressed as a sequence $X_i = [x_1, x_2, \cdots, x_k, \cdots, x_K]$, wherein $X_i$ is the data arrival process of the i-th transmitting device, $x_k$ is the number of data packets arriving in the k-th time window, and K is the number of time windows.

The transmitting device 120 may notify the receiving device 110 of its own data arrival process through signaling. The receiving device 110 may calculate the similarity between data arrival processes of individual transmitting devices. One way to calculate the similarity is:

$$\Delta\left(X_i, X_j\right) = \sum_{k=1}^{K}\left|\overline{x_i} - \overline{x_j}\right|_\circ$$

Wherein, $\overline{x_i} = x_i/\alpha_i$, $\alpha_i$ is the average arrival rate of the i-th transmitting device, i.e., $\alpha_i = 1/K \times \sum_k x_k$. The receiving device 110 can calculate the similarity for any two transmitting devices, and determine a similarity level based on the similarity. Then, the receiving device 110 may select two orthogonal sequences with a large code distance for the two transmitting devices with a high similarity level respectively.

In some embodiments of the present disclosure, the receiving device 110 selects the orthogonal sequence for the two transmitting devices based on reliability demand levels of the two transmitting devices, such that a code distance between the orthogonal sequence for the two transmitting devices corresponds to their reliability demand levels. Specifically, in the case that the reliability demand level of any of the two transmitting devices is high (i.e., requiring high reliability), the receiving device 110 selects two orthogonal sequences with a large code distance for the two transmitting device respectively.

In step 604, the receiving device 110 transmits the generated reference signal configuration information and the orthogonal sequence to the transmitting device 120, and the transmitting device 120 receives the reference signal configuration information and the orthogonal sequence from the receiving device 110. In some embodiments of the present disclosure, one or more items of the reference signal configuration information can be generated by the transmitting device 120 itself. In this case, there is no need to generate and transmit one or more items of the reference signal configuration information generated by the transmitting device 120 itself in steps 602 and 604.

In step 606, the transmitting device 120 randomly generates a random sequence based on the reference signal configuration information.

In step 608, the transmitting device 120 transmits the generated random sequence to the receiving device 110. The receiving device 110 may store the generated orthogonal sequence and the received random sequence in association with the transmitting device 120 for identification of the transmitting device 120.

In step 610, the transmitting device 120 generates a reference sequence based on the received orthogonal sequence and the generated random sequence.

Identification of the transmitting device

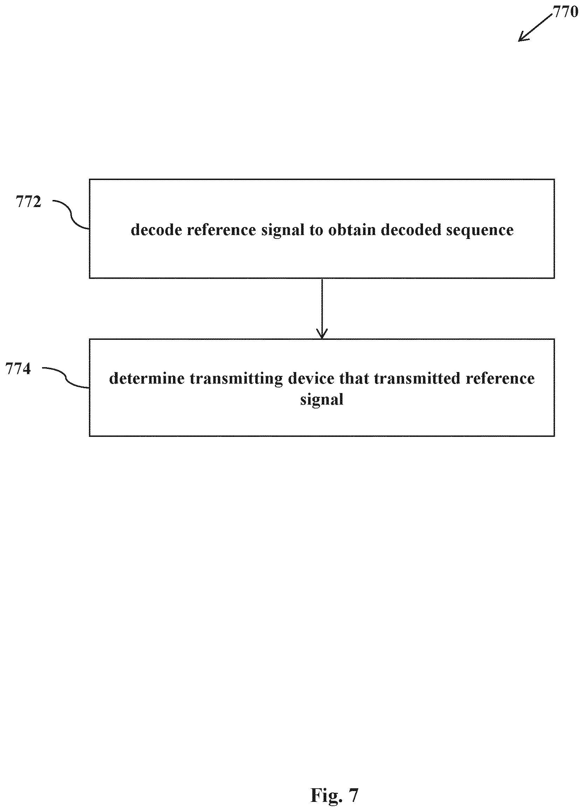

Figure 7 illustrates a processing flow 770 of identifying a transmitting device based on a reference signal in some embodiments of the present disclosure.
In step 772, the receiving device decodes the received reference signal to obtain a decoded sequence. In step 774, the receiving device determines the transmitting device that transmitted the reference signal based on the decoded sequence, the orthogonal sequence and the random sequence associated with the transmitting device.
In some embodiments of the present disclosure, the receiving device generates a reference sequence based on the orthogonal sequence and the random sequence associated with the transmitting device, and determines, by using a maximum posteriori probability method, which transmitting device's reference sequence corresponds to the decoded sequence, thereby determining the transmitting device that transmitted the reference signal. In some embodiments of the present disclosure, the receiving device performs a decrypting operation on a decoded sequence with an orthogonal sequence associated with the transmitting device as a key, and determines which transmitting device's random sequence corresponds to the decryption result, thereby determining the transmitting device that transmitted the reference signal.
In addition, in some embodiments of the present disclosure, the receiving device also determines information of the channel from a transmitting device to a receiving device according to received reference signal, and demodulates the data signal according to the information of the channel. For example, the receiving device obtains a random sequence according to generating methods of a orthogonal sequence, a decoded sequence and a reference sequence, and completes the acquisition of the physical layer decoding information accordingly. That is, the reference signal in the embodiment of the present disclosure may be used as a Demodulation Reference Signal (DMRS).
The processing flow in the communication system of some embodiments of the present disclosure has been described above. Next, the communication method of some embodiments of the present disclosure will be introduced.

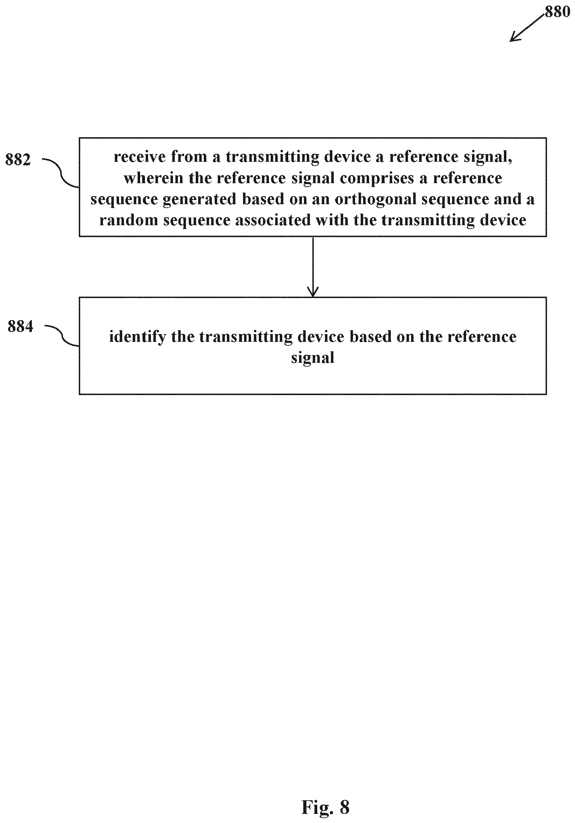

Figure 8 illustrates a communication method 880 executed by a receiving device in some embodiments of the present disclosure. In step 882, a reference signal is received from a transmitting device, wherein the reference signal comprises a reference sequence generated based on an orthogonal sequence and a random sequence associated with the transmitting device. In step 884, the transmitting device is identified based on the reference signal.

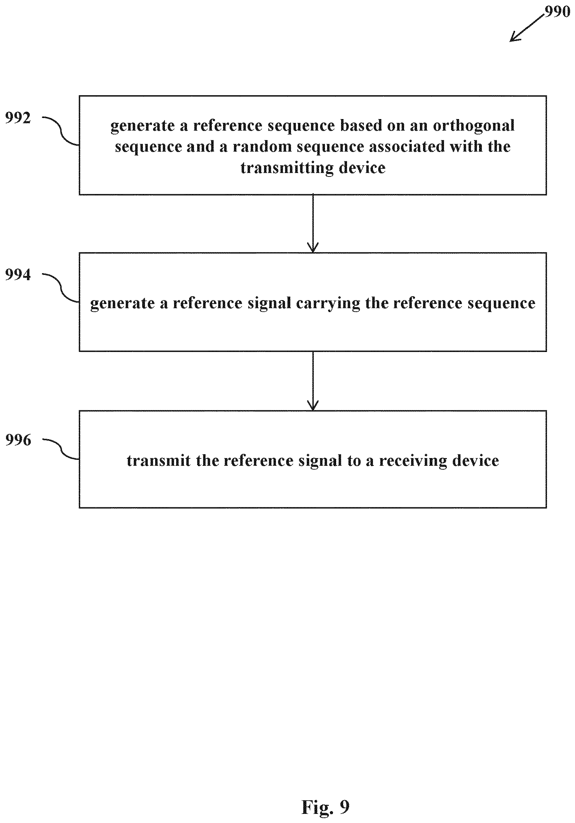

Figure 9 illustrates a communication method 990 executed by a transmitting device in some embodiments of the present disclosure. In step 992, a reference sequence is generated based on an orthogonal sequence and a random sequence associated with the transmitting device. In step 994, a reference signal carrying the reference sequence is generated. In step 996, the reference signal is transmitted to a receiving device.

In addition to the steps mentioned above, a receiving device and a transmitting device can also perform some other steps. These steps and operations in the steps have been described in detail above, and will not be repeated here.

In some embodiments of the present disclosure, a reference signal can be updated. Update methods include periodic update and event-based update. Periodic update means that the reference model of each transmitting device is updated in a given period of time. Event-based update means that the reference signal is updated when a given event occurs. The events includes the actual latency greater than a certain threshold, or the bit error rate higher than a certain threshold, etc. The update methods can be specified in reference signal configuration information.

In some embodiments of the present disclosure, in the case that NOMA and OMA coexist, it can be determined whether a transmitting device performs NOMA communication or OMA communication according to whether the transmitting device supports a reference signal for identifying the transmitting device. Specifically, for a transmitting device that supports a reference signal for identifying the transmitting device, it is determined to perform NOMA communication, and it is notified to use a reference signal for identifying the transmitting device. For a transmitting device that does not support a reference signal for identifying the transmitting device, it is determined that it performs OMA communication, and it is notified to use a traditional reference signal. In addition, in some embodiments of the present disclosure, the NOMA communication device and the OMA communication device can be scheduled in different time-frequency resources to avoid conflicts between them.

In some embodiments of the present disclosure, a reference signal is optimized for CP-OFDM and DFT-s-OFDM. In DFT-s-OFDM, a reference sequence of a reference signal is optimized to reduce the peak-to-average power ratio (PAPR). In CP-OFDM, a reference sequence of a reference signal is optimized to achieve high reliability.

In addition, in a half-duplex communication system, signal transmission and reception cannot be performed at the same time. Therefore, a communication device cannot receive a reference signal when transmitting a data signal, and thus cannot recognize the transmitting device. Therefore, in some embodiments of the present disclosure, according to the data arrival process of a communication device, the transmission of a reference signal is advanced to avoid the inability to receive the reference signal due to transmission of a data signal.

In a traditional communication system, a four-step random access procedure (RACH) is used. In step 1, a user device requests to access a Physical Random Access Channel (PRACH) and transmits a random access preamble. In step 2, a cellular network transmits random access response information according to the user device request. In step 3, the user device transmits data and random access identity information to the cellular network for the cellular network to manage the random access and conflicts of the user device. In step 4, the cellular network authorizes the user device to random access based on the information in the step 3.

In some embodiments of the present disclosure, a transmitting device accesses a receiving device through a two-step random access process (for example, a two-step RACH access mechanism). In step 1, the transmitting device utilizes the enhanced PRACH to transmit Msg1 (comprising the information in steps 1 and 3 in the four-step RACH), which contains information such as a RACH preamble and an identifier of the transmitting device. Step 2: The receiving device replies to the random access request of the transmitting device. For example, the receiving device utilizes PDCCH and PDSCH channels to transmit Msg2 (comprising the information in steps 2 and 4 in the four-step RACH), which contains information such as a RACH preamble ID, an identifier of the transmitting device, an indication of avoidance, and a contention resolution method.

In some embodiments of the present disclosure, a transmitting device may include in the two-step process a real-time demand level, a reliability demand level, a security demand level, data arrival process, CSI-RS, etc. of the transmitting device, for a receiving device to generate reference signal configuration information. In some embodiments of the present disclosure, a receiving device may generate reference signal configuration information and/or an orthogonal sequence for a transmitting device based on Msg1. In some embodiments of the present disclosure, a receiving device includes generated reference signal configuration information and/or an orthogonal sequence for a transmitting device in Msg2 of the two-step random access process.

In some embodiments of the present disclosure, a receiving device that is operable as a data receiving terminal, a gNB, or a leading vehicle in a Platooning is provided. The receiving device is configured to: obtain channel state information (CQI) of a link from a transmitting device; obtain information from the transmitting device, the information comprising one or more of QoS, information that characterizes data arrival process, and whether generating of a reference signal for identifying the transmitting device (for example, a DMRS for identifying the transmitting device) is supported.

In some embodiments of the present disclosure, the receiving device is further configured to determine a method for generating a reference signal for identifying a transmitting device, and transmitting an indication of the generating method to the transmitting device. The methods for generating a reference signal include one of: generated by a receiving device; generated by a transmitting device.

In some embodiments of the present disclosure, the receiving device is further configured to, in a case that a reference signal for identifying the transmitting device is generated by the receiving device, generate a root parameter of a reference signal for identifying the transmitting device (for example, information for generating a random sequence, indication information of a generating operation of a reference sequence), and transmit the root parameter of the reference signal to the transmitting device.

In some embodiments of the present disclosure, the receiving device is further configured to: in a case that a reference signal for identifying the transmitting device is generated by the transmitting device, determine reference signal configuration information of the transmitting device according to channel state information of a link of the transmitting device, and transmit the reference signal configuration information to the transmitting device. The transmitting device generates a reference signal for identifying the transmitting device based on the reference signal configuration information. The reference signal configuration information includes at least one of the following information: the number of other transmitting devices that are transmitted simultaneously with the transmitting device, and the specific information of other transmitting devices that are transmitted simultaneously with the transmitting device (for example, identifiers of other transmitting devices).

In some embodiments of the present disclosure, the receiving device is further configured to: in a case that a reference signal for identifying a transmitting device is generated by the transmitting device, receive the reference signal for identifying the transmitting device generated by the transmitting device.

In some embodiments of the present disclosure, depends on usage scenarios, different signaling is used to carry the generating method of a reference signal, a root parameter of a reference signal, and reference signal configuration information. For example, in a two-step random access process, an Msg2 transmitted in PDCCH and PDSCH channels carries the generating method of a reference signal, a root parameter of a reference signal, and reference signal configuration information. For example, in a Platooning scenario, Sidelink Control Information (SCI) is used to carry the generating method of a reference signal, a root parameter of a reference signal, and reference signal configuration information.

In some embodiments of the present disclosure, the receiving device is further configured to generate scheduling information for a transmitting device, and transmit the scheduling information to the transmitting device. The scheduling information includes time domain and frequency domain resources required for data transmission.

In some embodiments of the present disclosure, the receiving device is further configured to receive a data signal from the transmitting device according to the scheduling information, identify the transmitting device by detecting a reference signal associated with the data signal, and perform data decoding.

In some embodiments of the present disclosure, a transmitting device that is operable as a data transmitting terminal, a UE, or a following vehicle in a Platooning is provided. The transmitting device is configured to transmit a reference signal (for example, CSI-RS) for channel state measurement to a receiving device, and transmit to the receiving device information for determining a generating method and a parameter of a reference signal for identifying the transmitting device. The information includes one or more of QoS, information that characterizes data arrival process, and whether generating of a reference signal for identifying the transmitting device (for example, a DMRS for identifying the transmitting device) is supported. The transmitting device transmits Msg1 with the enhanced PRACH.

In some embodiments of the present disclosure, depends on usage scenarios, different signaling is used to carry information for determining a generating method and a parameter of a reference signal for identifying the transmitting device. For example, in a two-step RACH scenario, an Msg1 transmitted with the enhanced PRACH carries information for determining a generating method and a parameter of a reference signal for identifying the transmitting device. For example, in a Platooning scenario, Sidelink Control Information (SCI) is used to carry information for determining a generating method and a parameter of a reference signal for identifying the transmitting device.

In some embodiments of the present disclosure, the transmitting device is further configured to obtain a generating method and a parameter of a reference signal for identifying the transmitting device from a receiving device.

In some embodiments of the present disclosure, the transmitting device is further configured to, in a case that a reference signal for identifying the transmitting device is generated by a receiving device, generate a reference signal for identifying the transmitting device according to the received root parameter of the reference signal for identifying the transmitting device (for example, information for generating a random sequence, indication information of a generating operation of a reference sequence).

In some embodiments of the present disclosure, the transmitting device is further configured to, in a case that a reference signal for identifying the transmitting device is generated by the transmitting device, generate a reference signal for identifying the transmitting device according to the received reference signal configuration information, and feed back the generated reference signal for identifying the transmitting device to the receiving device. The reference signal for identifying the transmitting device can be generated in the following ways: selecting a set of orthogonal sequences according to reference signal configuration information; selecting one sequence A from the set of orthogonal sequences randomly; extending an identifier of the transmitting device (through the method of zero padding at the header or the tail) into sequence B with the same length as sequence A; interleaving sequences A and B, or bit-wise operation (for example XOR operation), to obtain a reference signal for identifying the transmitting device.

In some embodiments of the present disclosure, the transmitting device is further configured to: receive scheduling information from the receiving device; according to the scheduling information, use a reference signal for identifying the transmitting device to transmit a data signal;

In some embodiments of the present disclosure, a reference signal is generated according to one or more of: multiple access methods, e.g., OMA or NOMA; a type of carrier, e.g., CP-OFDM or DFT-s-OFDM; duplex methods. For example, in the case of half-duplex, a timing relationship is established between the transmitted reference signal and the data signal to avoid the inability of the receiving device to receive the reference signal due to half-duplex, and cannot use the reference signal to identify the transmitting device, thereby reducing data decoding complexity.

<3. Application examples>

The technology of the present disclosure can be applied to various products. For example, the apparatus 200 may be implemented as various types of computing devices.

For example, the apparatus 200 can be implemented as any type of evolved node B (eNB), gNB, or TRP (Transmit Receive Point), such as a macro eNB/gNB and a small eNB/gNB. The small eNB/gNB can be an eNB/gNB covering a cell smaller than a macro cell, such as a pico eNB/gNB, a micro eNB/gNB, and a home (femto) eNB/gNB. Alternatively, the base station 100 can be implemented as any other type of base station, such as NodeB and base transceiver station (BTS). The apparatus 200 may include: a main body (also referred to as a base station device) configured to control wireless communication; and one or more remote wireless heads (RRHs) disposed in a different place from the main body. In addition, various types of terminals to be described below can each operate as the apparatus 200 by temporarily or semi-persistently performing functions of base stations.

For example, the apparatus 200 can be implemented as a mobile terminal (such as a smart phone, a tablet personal computer (PC), a notebook PC, a portable game terminal, a portable/dongle type mobile router, and a digital camcorder) or a in-vehicle terminal (such as a car navigation device). The communication device 300 can also be implemented as a terminal (also referred to as a machine type communication (MTC) terminal) that performs machine-to-machine (M2M) communication. In addition, the apparatus 200 can be a wireless communication module (such as an integrated circuit module comprising a single wafer) installed on each of the aforementioned terminals.

[4-1. Application examples regarding computing devices]

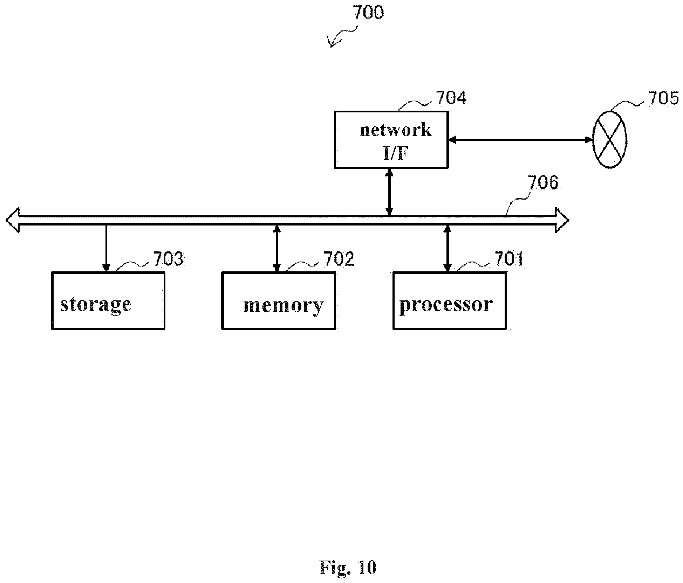

Figure 10 is a block diagram illustrating an example of a schematic configuration of a computing device 700 to which the technology of the present disclosure can be applied. The computing device 700 includes a processor 701, a memory 702, a storage 703, a network I/F 704, and a bus 706.

The processor 701 can be, for example, a central processing unit (CPU) or a digital signal processor (DSP), and controls the functions of the server 700. The memory 702 includes a random access memory (RAM) and a read only memory (ROM), and stores data and programs executed by the processor 701. The storage 703 can include a storage medium, such as a semiconductor memory and a hard disk.

The network I/F 704 is a wired communication interface for connecting the server 700 to the wired communication network 705. The wired communication network 705 can be a core network such as an evolved packet core network (EPC) or a packet data network (PDN) such as the Internet.

The bus 706 connects the processor 701, the memory 702, the storage 703, and the network I/F 704 to each other. The bus 706 can include two or more buses (such as a high-speed bus and a low-speed bus) each having a different speed.

[4-2. Application examples regarding base stations]

(First application example)

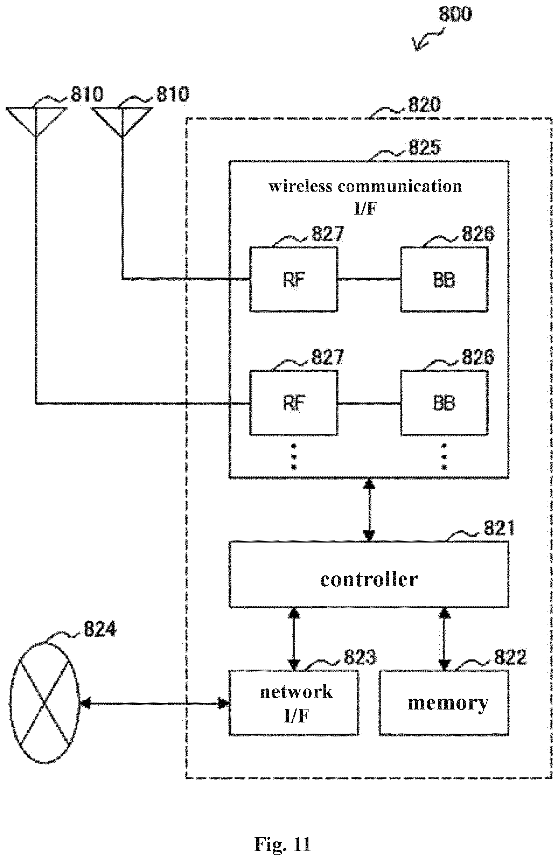

Figure 11 is a block diagram illustrating a first example of a schematic configuration of an gNB to which the technology of the present disclosure may be applied. An gNB 800 includes one or more antennas 810 and a base station device 820. The base station device 820 and each antenna 810 may be connected to each other via an RF cable.

Each of the antennas 810 includes a single or multiple antenna units (such as multiple antenna elements included in a multiple input multiple output (MIMO) antenna), and is used for the base station device 820 to transmit and receive wireless signals. As illustrated in Figure 11, the gNB 800 may include multiple antennas 810. For example, the multiple antennas 810 can be compatible with multiple frequency bands used by the gNB 800. Although Figure 11 illustrates an example in which the gNB 800 includes multiple antennas 810, the gNB 800 may also include a single antenna 810.

The base station device 820 includes a controller 821, a memory 822, a network I/F 823, and a wireless communication I/F 825.

The controller 821 may be, for example, a CPU or a DSP, and operates various functions of higher layers of the base station device 820. For example, the controller 821 generates a data packet from data in signals processed by the wireless communication I/F 825, and transfers the generated packet via the network I/F 823. The controller 821 may bundle data from multiple base band processors to generate the bundled packet and transfer the generated bundled packet. The controller 821 may have logic functions of performing control such as radio resource control, radio bearer control, mobility management, admission control, and scheduling. This control may be performed in conjunction with an gNB or a core network node in the vicinity. The memory 822 includes RAM and ROM, and stores a program that is executed by the controller 821, and various types of control data (such as a terminal list, transmission power data, and scheduling data).

The network I/F 823 is a communication interface for connecting the base station device 820 to a core network 824. The controller 821 may communicate with a core network node or another gNB via the network I/F 823. In that case, the gNB 800, and the core network node or the other gNB may be connected to each other through a logical interface (such as an S1 interface and an X2 interface). The network I/F 823 may also be a wired communication interface or a wireless communication interface for radio backhaul. If the network I/F 823 is a wireless communication interface, the network I/F 823 may use a higher frequency band for wireless communication than a frequency band used by the wireless communication I/F 825.

The wireless communication I/F 825 supports any cellular communication scheme such as Long Term Evolution (LTE) and LTE-Advanced, and provides radio connection to terminal positioned in a cell of the gNB 800 via the antenna 810. The wireless communication I/F 825 may typically include, for example, a baseband (BB) processor 826 and an RF circuit 827. The BB processor 826 may perform, for example, encoding/decoding, modulation/demodulation, and multiplexing/demultiplexing, and performs various types of signal processing of layers (such as LI, medium access control (MAC), radio link control (RLC), and packet data convergence protocol (PDCP)). The BB processor 826 may have a part or all of the above-described logical functions Instead of the controller 821. The BB processor 826 may be a memory that stores a communication control program, or a module that includes a processor and a related circuitry configured to execute the program. Updating the program may allow the functions of the BB processor 826 to be changed. The module may be a card or a blade that is inserted into a slot of the base station device 820. Alternatively, the module may also be a chip that is mounted on the card or the blade. Meanwhile, the RF circuit 827 may include, for example, a mixer, a filter, and an amplifier, and transmits and receives wireless signals via the antenna 810.

As illustrated in Figure 11, the wireless communication I/F 825 may include the multiple BB processors 826. For example, the multiple BB processors 826 may be compatible with multiple frequency bands used by the gNB 800. As illustrated in Figure 11, the wireless communication I/F 825 may include the multiple RF circuits 827. For example, the multiple RF circuits 827 may be compatible with multiple antenna elements. Although Figure 11 illustrates the example in which the wireless communication I/F 825 includes the multiple BB processors 826 and the multiple RF circuits 827, the wireless communication I/F 825 may also include a single BB processor 826 or a single RF circuit 827.

(Second application example)

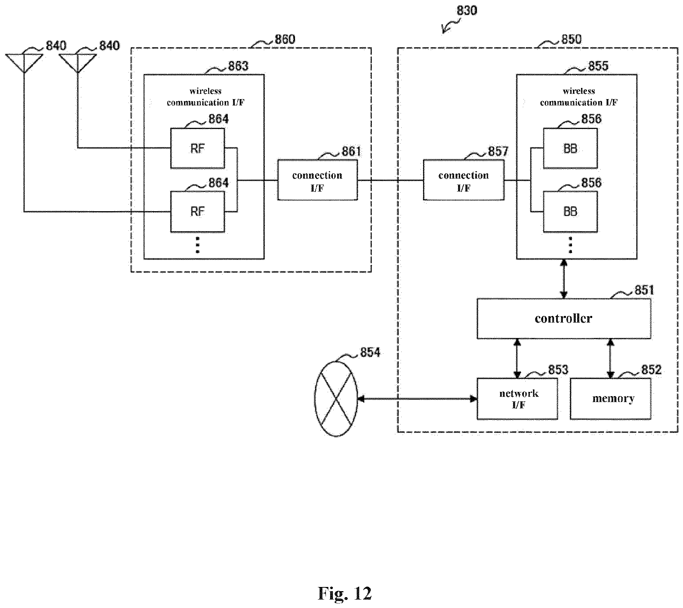

Figure 12 is a block diagram illustrating a second example of a schematic configuration of an gNB to which the technology of the present disclosure may be applied. An gNB 830 includes one or more antennas 840, a base station device 850, and an RRH 860. The RRH 860 and each antenna 840 may be connected to each other via an RF cable. The base station device 850 and the RRH 860 may be connected to each other via a high speed line such as an optic fiber cable.

Each of the antennas 840 includes a single or multiple antenna elements (such as multiple antenna elements included in a MIMO antenna) and is used for the RRH 860 to transmit and receive wireless signals. As illustrated in Figure 12, the gNB 830 may include the multiple antennas 840. For example, the multiple antennas 840 may be compatible with multiple frequency bands used by the gNB 830. Although Figure 12 illustrates an example in which the gNB 830 includes multiple antennas 840, the gNB 830 may also include a single antenna 840.

The base station device 850 includes a controller 851, a memory 852, a network I/F 853, a wireless communication I/F 855, and a connection I/F 857. The controller 851, the memory 852, and the network I/F 853 are the same as the controller 821, the memory 822, and the network I/F 823 described with reference to Figure 11.

The wireless communication I/F 855 supports any cellular communication scheme (such as LTE and LTE-Advanced) and provides wireless communication to a terminal positioned in a sector corresponding to the RRH 860 via the RRH 860 and the antenna 840. The wireless communication I/F 855 may typically include, for example, a BB processor 856. The BB processor 856 is the same as the BB processor 826 described with reference to Figure 11, except that the BB processor 856 is connected to the RF circuit 864 of the RRH 860 via the connection I/F 857. The wireless communication I/F 855 may include the multiple BB processors 856, as illustrated in Figure 12. For example, the multiple BB processors 856 may be compatible with multiple frequency bands used by the gNB 830. Although Figure 12 illustrates the example in which the wireless communication I/F 855 includes the multiple BB processors 856, the wireless communication I/F 855 may also include a single BB processor 856.

The connection I/F 857 is an interface for connecting the base station device 850 (wireless communication I/F 855) to the RRH 860. The connection I/F 857 may also be a communication module for communicating in the above-described high speed line that connects the base station device 850 (wireless communication I/F 855) to the RRH 860.

The RRH 860 includes a connection I/F 861 and a wireless communication I/F 863.

The connection I/F 861 is an interface for connecting the RRH 860 (wireless communication I/F 863) to the base station device 850. The connection I/F 861 may also be a communication module for communication in the above-described high speed line.

The wireless communication I/F 863 transmits and receives wireless signals via the antenna 840. Wireless communication I/F 863 may typically include, for example, the RF circuit 864. The RF circuit 864 may include, for example, a mixer, a filter, and an amplifier, and transmits and receives wireless signals via the antenna 840. The wireless communication I/F 863 may include multiple RF circuits 864, as illustrated in Figure 12. For example, the multiple RF circuits 864 may support multiple antenna elements. Although Figure 12 illustrates the example in which the wireless communication I/F 863 includes the multiple RF circuits 864, the wireless communication I/F 863 may also include a single RF circuit 864.

[4-3. Application examples regarding terminal devices]

(First application example)

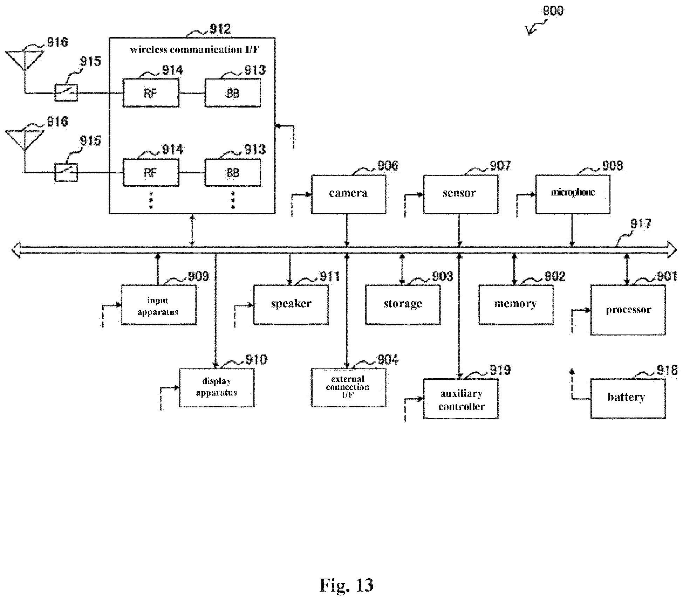

Figure 13 is a block diagram illustrating an example of a schematic configuration of a smartphone 900 to which the technology of the present disclosure may be applied. The smartphone 900 includes a processor 901, a memory 902, a storage 903, an external connection I/F 904, a camera 906, a sensor 907, a microphone 908, an input apparatus 909, a display device 910, a speaker 911, a wireless communication I/F 912, one or more antenna switches 915, one or more antennas 916, a bus 917, a battery 918, and an auxiliary controller 919.

The processor 901 may be, for example, a CPU or a system on a chip (SoC), and controls functions of an application layer and another layer of the smart phone 900. The memory 902 includes RAM and ROM, and stores data and a program that is executed by the processor 901. The storage 903 may include a storage medium such as a semiconductor memory and a hard disk. The external connection I/F 904 is an interface for connecting an external device such as a memory card and a universal serial bus (USB) device to the smartphone 900.

The camera 906 includes an image sensor such as a charge coupled device (CCD) and a complementary metal oxide semiconductor (CMOS), and generates a captured image. The sensor 907 may include a group of sensors such as a measurement sensor, a gyro sensor, a geomagnetic sensor, and an acceleration sensor. The microphone 908 converts sounds that are input to the smartphone 900 to audio signals. The input apparatus 909 includes, for example, a touch sensor configured to detect touch onto a screen of the display apparatus 910, a keypad, a keyboard, a button, or a switch, and receives an operation or an information input from a user. The display apparatus 910 includes a screen such as a liquid crystal display (LCD) and an organic light-emitting diode (OLED) display, and displays an output image of the smartphone 900. The speaker 911 converts audio signals that are output from the smartphone 900 to sounds.

The wireless communication I/F 912 supports any cellular communication scheme (such as LTE and LTE-Advanced) and performs wireless communication. The wireless communication I/F 912 may typically include, for example, a BB processor 913 and an RF circuit 914. The BB processor 913 may perform, for example, encoding/decoding, modulation/demodulation, and multiplexing/demultiplexing, and performs various types of signal processing for wireless communication. Meanwhile, the RF circuit 914 may include, for example, a mixer, a filter, and an amplifier, and transmits and receives wireless signals via the antenna 916. The wireless communication I/F 912 may be one chip module that has the BB processor 913 and the RF circuit 914 integrated thereon. The wireless communication I/F 912 may include the multiple BB processors 913 and the multiple RF circuits 914, as illustrated in Figure 13. Although Figure 13 illustrates the example in which the wireless communication I/F 912 includes the multiple BB processors 913 and the multiple RF circuits 914, the wireless communication I/F 912 may also include a single BB processor 913 or a single RF circuit 914.

Furthermore, in addition to a cellular communication scheme, the wireless communication I/F 912 may support another type of wireless communication scheme such as a short-distance wireless communication scheme, a near field communication scheme, and a wireless local area network (LAN) scheme. In that case, the wireless communication I/F 912 may include the BB processor 913 and the RF circuit 914 for each wireless communication scheme.

Each of the antenna switches 915 switches connection destinations of the antennas 916 among multiple circuits (such as circuits for different wireless communication schemes) included in the wireless communication I/F 912.

Each of the antennas 916 includes a single or multiple antenna elements (such as multiple antenna elements included in an MIMO antenna), and is used for the wireless communication I/F 912 to transmit and receive wireless signals. The smartphone 900 may include multiple antennas 916, as illustrated in Figure 13. Although Figure 13 illustrates the example in which the smartphone 900 includes the multiple antennas 916, the smartphone 900 may also include a single antenna 916.

Furthermore, the smart phone 900 may include the antenna 916 for each wireless communication scheme. In that case, the antenna switches 915 may be omitted from the configuration of the smartphone 900.

The bus 917 connects the processor 901, the memory 902, the storage 903, the external connection I/F 904, the camera 906, the sensor 907, the microphone 908, the input apparatus 909, the display apparatus 910, the speaker 911, the wireless communication I/F 912, and the auxiliary controller 919 to each other. The battery 918 supplies power to blocks of the smart phone 900 illustrated in Figure 13 via feeder lines, which are partially shown as dashed lines in the figure. The auxiliary controller 919 operates a minimum necessary function of the smartphone 900, for example, in a sleep mode.

(Second application example)

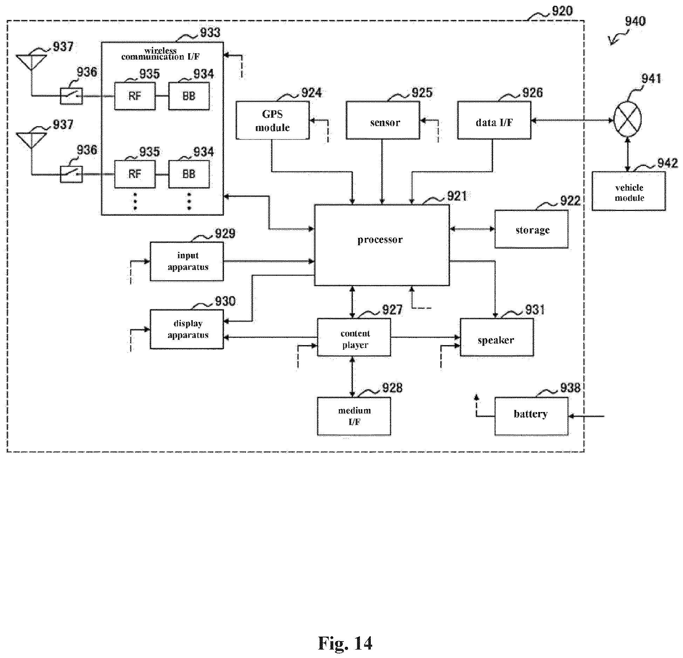

Figure 14 is a block diagram illustrating an example of a schematic configuration of a car navigation device 920 to which the technology of the present disclosure may be applied. The car navigation device 920 includes a processor 921, a memory 922, a global positioning system (GPS) module 924, a sensor 925, a data I/F 926, a content player 927, a storage medium I/F 928, an input apparatus 929, a display apparatus 930, a speaker 931, and a wireless communication I/F 933, one or more antenna switches 936, one or more antennas 937, and a battery 938.

The processor 921 may be, for example, a CPU or a SoC, and controls a navigation function and another function of the car navigation device 920. The memory 922 includes RAM and ROM, and stores data and a program that is executed by the processor 921.

The GPS module 924 uses GPS signals received from a GPS satellite to measure a position (such as latitude, longitude, and altitude) of the car navigation device 920. The sensor 925 may include a group of sensors such as a gyro sensor, a geomagnetic sensor, and a barometric sensor. The data I/F 926 is connected to, for example, an in-vehicle network 941 via a terminal that is not shown, and acquires data (such as vehicle speed data) generated by the vehicle.

The content player 927 reproduces content stored in a storage medium (such as a CD and a DVD) that is inserted into the storage medium I/F 928. The input apparatus 929 includes, for example, a touch sensor configured to detect touch onto a screen of the display apparatus 930, a button, or a switch, and receives an operation or an information input from a user. The display apparatus 930 includes a screen such as a LCD or an OLED display, and displays an image of the navigation function or content that is reproduced. The speaker 931 outputs sounds of the navigation function or the content that is reproduced.

The wireless communication I/F 933 supports any cellular communication scheme (such as LTE and LTE-Advanced) and performs wireless communication. The wireless communication I/F 933 may typically include, for example, a BB processor 934 and an RF circuit 935. The BB processor 934 may perform, for example, encoding/decoding, modulating/demodulating, and multiplexing/demultiplexing, and performs various types of signal processing for wireless communication. Meanwhile, the RF circuit 935 may include, for example, a mixer, a filter, and an amplifier, and transmits and receives wireless signals via the antenna 937. The wireless communication I/F 933 may also be one chip module having the BB processor 934 and the RF circuit 935 integrated thereon. The wireless communication I/F 933 may include the multiple BB processors 934 and the multiple RF circuits 935, as illustrated in Figure 14. Although Figure 14 illustrates the example in which the wireless communication I/F 933 includes the multiple BB processors 934 and the multiple RF circuits 935, the wireless communication I/F 933 may also include a single BB processor 934 or a single RF circuit 935.

Furthermore, in addition to a cellular communication scheme, the wireless communication I/F 933 may support another type of wireless communication scheme, such as a short-distance wireless communication scheme, a near-field communication scheme, and a wireless LAN scheme. In that case, the wireless communication I/F 933 may include the BB processor 934 and the RF circuit 935 for each wireless communication scheme.

Each of the antenna switches 936 switches connection destinations of the antennas 937 among multiple circuits (such as circuits for different wireless communication schemes) included in the wireless communication I/F 933.

Each of the antennas 937 includes a single or multiple antenna elements (such as multiple antenna elements included in an MIMO antenna) and is used for the wireless communication I/F 933 to transmit and receive wireless signals. The car navigation device 920 may include the multiple antennas 937, as illustrated in Figure 14. Although Figure 14 illustrates the example in which the car navigation device 920 includes the multiple antennas 937, the car navigation device 920 may also include a single antenna 937.

Furthermore, the car navigation device 920 may include the antenna 937 for each wireless communication scheme. In that case, the antenna switches 936 may be omitted from the configuration of the car navigation device 920.

The battery 938 supplies power to blocks of the car navigation device 920 illustrated in Figure 14 via feeders lines that are partially shown as dashed lines in the figure. The battery 938 accumulates power supplied from the vehicle.

The technology of the present disclosure may also be realized as an in-vehicle system (or a vehicle) 940 including one or more blocks of the car navigation device 920, the in-vehicle network 941, and a vehicle module 942. The vehicle module 942 generates vehicle data such as vehicle speed, engine speed, and trouble information, and outputs the generated data to the in-vehicle network 941.

The various illustrative blocks and components described in connection with the present disclosure may be implemented or performed with a general purpose processor, a digital signal processor (DSP), an ASIC, an FPGA or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, and/or state machine. A processor may also be implemented as a combination of computing devices, e.g., a combination of a DSP and a microprocessor, a plurality of microprocessors, one or more microprocessors in conjunction with a DSP core, and/or any other such configuration.

The functions described herein may be implemented in hardware, software executed by a processor, firmware, or any combination thereof. If implemented in software executed by a processor, the functions may be stored on a non-transitory computer readable medium or transmitted as one or more instructions or code on a non-transitory computer readable medium. Other examples and implementations are within the scope and spirit of the disclosure and the appended claims. For example, in view of the nature of the software, the functions described above may be performed using software executed by a processor, hardware, firmware, hardwired, or any combination of thereof. Features that implement the functions may also be physically placed at various locations, including being distributed such that portion of the functionality are realized at different physical locations.

Furthermore, the disclosure of components contained within or separate from other components should be considered as exemplary, as various other architectures may potentially be realized to achieve the same functionality, including incorporation of all, a majority part of, and/or some of the elements as one or more single structures or a portion of a separated structure.

Non-transitory computer readable media can be any available non-transitory media that may be accessed by a general purpose or special purpose computer. By way of example and not limitation, a non-transitory computer readable medium may comprise RAM, ROM, EEPROM, flash memory, CD-ROM, DVD or other optical disk storage, disk storage or other magnetic storage device, or any other medium that can be used to carry or store desired program code component in the form of instruction or data structure and that can be accessed by a general purpose or special purpose computer or a general purpose or special purpose processor.

The foregoing description of the disclosure is provided to enable a person skilled in the art to make or use the disclosure. The various modifications of the present disclosure will be apparent to those skilled in the art, and the general principles defined herein may be applied to other variations without departing from the scope of the present disclosure. Accordingly, the present disclosure is not limited to the examples and designs described herein, rather, it corresponds to the broadest scope consistent with the disclosed principles and novel features.

Some embodiments of the present disclosure also include following implementations.

1. A receiving device, comprising:

   processing circuitry configured to
   receive a reference signal from a transmitting device, wherein the reference signal carries a reference sequence generated based on an orthogonal sequence and a random sequence associated with the transmitting device; and
   identify the transmitting device based on the reference signal.

2. The receiving device according to item 1, wherein the processing circuitry is further configured to

   generate the orthogonal sequence; and
   transmitting the orthogonal sequence to the transmitting device.

3. The receiving device according to item 1, wherein the processing circuitry is further configured to

   generate the orthogonal sequence; and
   transmitting the orthogonal sequence to the transmitting device.

4. The receiving device according to item 1, wherein identifying the transmitting device based on the reference signal comprises:

   obtaining a decoded sequence by decoding the reference signal;
   determining the transmitting device that transmitting the reference signal based on the decoded sequence and the orthogonal sequence and the random sequence associated with the transmitting device.

5. The receiving device according to item 1, wherein the reference sequence is generated by one of the following operations:

   a scrambling operation on the orthogonal sequence with the random sequence; or
   an encrypting operation on the random sequence with the orthogonal sequence.

6. The receiving device according to item 1, wherein the processing circuitry is further configured to

determine a type of the orthogonal sequence based on a real-time demand level or a reliability demand level of the transmitting device.

7. The receiving device according to item 1, wherein the processing circuitry is further configured to determine a length of the orthogonal sequence based on a real-time demand level of the transmitting device or a number of transmitting devices connected to the receiving device.

8. The receiving device according to item 1, wherein the processing circuitry is further configured to determine a type of generating operation of the reference sequence based on a real-time demand level or a security demand level of the transmitting device.

9. The receiving device according to item 3, wherein the processing circuitry is further configured to

select the orthogonal sequence for the transmitting device based on a similarity level between data arrival processes of the transmitting device and an other transmitting device, such that a code distance between the orthogonal sequence for the transmitting device and an orthogonal sequence for the other transmitting device corresponds to the similarity level; or select the orthogonal sequence for the transmitting device based on reliability demand levels of the transmitting device and the other transmitting device, such that a code distance between the orthogonal sequence for the transmitting device and the orthogonal sequence for the other transmitting device corresponds to the reliability demand levels.

10. The receiving device according to item 1, wherein the processing circuitry is further configured to transmit to the transmitting device one or more of a type of the orthogonal sequence, a length of the orthogonal sequence or a type of generating operation of the reference sequence.

11. The receiving device according to item 1, wherein the receiving device is configured to be a base station.

12. A transmitting device, comprising: processing circuitry configured to

generate a reference sequence based on an orthogonal sequence and a random sequence associated with the transmitting device; generate a reference signal carrying the reference sequence; and transmit the reference signal to a receiving device.

13. The transmitting device according to item 12, wherein the processing circuitry is further configured to

generate the orthogonal sequence; generate the random sequence randomly; and transmit the orthogonal sequence and the random sequence to the receiving device.

14. The transmitting device according to item 12, wherein the processing circuitry is further configured to

receive the orthogonal sequence from the receiving device; and generate the random sequence randomly.

15. The transmitting device according to item 12, wherein the reference sequence is generated by one of the following operations:

a scrambling operation on the orthogonal sequence with the random sequence; or an encrypting operation on the random sequence with the orthogonal sequence.

16. The electronic device according to item 13, wherein the processing circuitry is further configured to determine a type of the orthogonal sequence based on a real-time demand level or a reliability demand level of the transmitting device.

17. The transmitting device according to item 13, wherein the processing circuitry is further configured to determine a length of the orthogonal sequence based on a real-time demand level of the transmitting device or a number of transmitting devices connected to the receiving device.

18. The transmitting device according to item 12, wherein the processing circuitry is further configured to determine a type of generating operation of the reference sequence based on a real-time demand level or a security demand level of the transmitting device.

19. The transmitting device according to item 12, wherein the processing circuitry is further configured to receive from the receiving device one or more of a type of the orthogonal sequence, a length of the orthogonal sequence or a type of generating operation of the reference sequence.

20. The transmitting device according to item 12, wherein the transmitting device is configured to be a terminal device.

21. A communication method, comprising:

receiving a reference signal from a transmitting device, wherein the reference signal carries a reference sequence generated based on an orthogonal sequence and a random sequence associated with the transmitting device, and;

identifying the transmitting device based on the reference signal.

22. A communication method, comprising:

generating a reference sequence based on an orthogonal sequence and a random sequence associated with a transmitting device;
generating a reference signal carrying the reference sequence; and
transmitting the reference signal to a receiving device.

23. A non-transitory computer-readable storage medium having instructions stored thereon, which when executed by a processor causes the processor to perform the method according to item 21 or 22.

In addition, according to some embodiments of the present disclosure, the technical solutions of any one or more of items 1 to 23 can be used in combination

**Claims**

1.  A receiving device, comprising:
    processing circuitry configured to

    receive a reference signal from a transmitting device, wherein the reference signal carries a reference sequence generated based on an orthogonal sequence and a random sequence associated with the transmitting device; and
    identify the transmitting device based on the reference signal.

2.  The receiving device according to Claim 1, wherein the processing circuitry is further configured to receive the orthogonal sequence and the random sequence from the transmitting device, and store the orthogonal sequence and the random sequence in association with an identifier of the transmitting device.

3.  The receiving device according to Claim 1, wherein the processing circuitry is further configured to

    generate the orthogonal sequence; and
    transmitting the orthogonal sequence to the transmitting device.

4.  The receiving device according to Claim 1, wherein identifying the transmitting device based on the reference signal comprises:

    obtaining a decoded sequence by decoding the reference signal;
    determining the transmitting device that transmitting the reference signal based on the decoded sequence and the orthogonal sequence and the random sequence associated with the transmitting device.

5.  The receiving device according to Claim 1, wherein the reference sequence is generated by one of the following operations:

    a scrambling operation on the orthogonal sequence with the random sequence; or
    an encrypting operation on the random sequence with the orthogonal sequence.

6.  The receiving device according to Claim 1, wherein the processing circuitry is further configured to determine a type of the orthogonal sequence based on a real-time demand level or a reliability demand level of the transmitting device.

7.  The receiving device according to Claim 1, wherein the processing circuitry is further configured to determine a length of the orthogonal sequence based on a real-time demand level of the transmitting device or a number of transmitting devices connected to the receiving device.

8.  The receiving device according to Claim 1, wherein the processing circuitry is further configured to determine a type of generating operation of the reference sequence based on a real-time demand level or a security demand level of the transmitting device.

9.  The receiving device according to Claim 3, wherein the processing circuitry is further configured to

    select the orthogonal sequence for the transmitting device based on a similarity level between data arrival processes of the transmitting device and an other transmitting device, such that a code distance between the orthogonal sequence for the transmitting device and an orthogonal sequence for the other transmitting device corresponds to the similarity level; or
    select the orthogonal sequence for the transmitting device based on reliability demand levels of the transmitting device and the other transmitting device, such that a code distance between the orthogonal sequence for the transmitting device and the orthogonal sequence for the other transmitting device corresponds to the reliability demand levels.

10. The receiving device according to Claim 1, wherein the processing circuitry is further configured to transmit to the transmitting device one or more of a type of the orthogonal sequence, a length of the orthogonal sequence or a type of generating operation of the reference sequence.

11. The receiving device according to Claim 1, wherein the receiving device is configured to be a base station.

12. A transmitting device, comprising:
   processing circuitry configured to

   generate a reference sequence based on an orthogonal sequence and a random sequence associated with the transmitting device;
   generate a reference signal carrying the reference sequence; and
   transmit the reference signal to a receiving device.

13. The transmitting device according to Claim 12, wherein the processing circuitry is further configured to

   generate the orthogonal sequence;
   generate the random sequence randomly; and
   transmit the orthogonal sequence and the random sequence to the receiving device.

14. The transmitting device according to Claim 12, wherein the processing circuitry is further configured to

   receive the orthogonal sequence from the receiving device; and
   generate the random sequence randomly.

15. The transmitting device according to Claim 12, wherein the reference sequence is generated by one of the following operations:

   a scrambling operation on the orthogonal sequence with the random sequence; or
   an encrypting operation on the random sequence with the orthogonal sequence.

16. The electronic device according to Claim 13, wherein the processing circuitry is further configured to determine a type of the orthogonal sequence based on a real-time demand level or a reliability demand level of the transmitting device.

17. The transmitting device according to Claim 13, wherein the processing circuitry is further configured to determine a length of the orthogonal sequence based on a real-time demand level of the transmitting device or a number of transmitting devices connected to the receiving device.

18. The transmitting device according to Claim 12, wherein the processing circuitry is further configured to
determine a type of generating operation of the reference sequence based on a real-time demand level or a security demand level of the transmitting device.

19. The transmitting device according to Claim 12, wherein the processing circuitry is further configured to
receive from the receiving device one or more of a type of the orthogonal sequence, a length of the orthogonal sequence or a type of generating operation of the reference sequence.

20. The transmitting device according to Claim 12, wherein the transmitting device is configured to be a terminal device.

21. A communication method, comprising:

   receiving a reference signal from a transmitting device, wherein the reference signal carries a reference sequence generated based on an orthogonal sequence and a random sequence associated with the transmitting device, and;
   identifying the transmitting device based on the reference signal.

22. A communication method, comprising:

   generating a reference sequence based on an orthogonal sequence and a random sequence associated with a transmitting device;
   generating a reference signal carrying the reference sequence; and
   transmitting the reference signal to a receiving device.

23. A non-transitory computer-readable storage medium having instructions stored thereon, which when executed by a processor causes the processor to perform the method according to Claim 21 or 22.

Fig. 1

210

200

processing unit
250

wireless
communication unit
220

reference signal
generating unit
251

network
communication unit
230

identification unit
252

storage unit
240

signaling unit
253

Fig. 2

300

receiving device 110

transmitting device 120

generate
reference
signal
302

reference signal 304

identify
transmitting
device
306

data signal 308

decode data

310

Fig. 3

400

data signal

| SU-detecting 401-1 | → | demapping 402-1 | → | FEC decoding 403-1 | decoded bits |

first stage

| signal cancellation 405-1 | ← | signal reconstruction 404-1 |

| SU-detecting 401-2 | → | demapping 402-2 | → | FEC decoding 403-2 | decoded bits |

second stage

.
.
.

Fig. 4

500

receiving device 110                                    transmitting device 120

```
┌─────────────────┐
│ generate reference │
│ signal configuration │
│   information    │
│      502        │
└─────────────────┘
```

reference signal
configuration
information
504

```
┌─────────────────┐
│ generate orthogonal │
│  sequence and    │
│ random sequence  │
│      506        │
└─────────────────┘
```

orthogonal sequence
and random
sequence
508

```
┌─────────────────┐
│ generate reference │
│   sequence      │
│      510        │
└─────────────────┘
```

Fig. 5

600

receiving device 110

transmitting device 120

generate reference
signal configuration
information and
orthogonal
sequence
602

reference signal configuration
information and orthogonal
sequence
604

generate random
sequence
606

random sequence 608

generate reference
sequence
610

Fig. 6

770

772 — decode reference signal to obtain decoded sequence

774 — determine transmitting device that transmitted reference signal

**Fig. 7**

880

882 receive from a transmitting device a reference signal, wherein the reference signal comprises a reference sequence generated based on an orthogonal sequence and a random sequence associated with the transmitting device

884 identify the transmitting device based on the reference signal

Fig. 8

990

992 — generate a reference sequence based on an orthogonal sequence and a random sequence associated with the transmitting device

994 — generate a reference signal carrying the reference sequence

996 — transmit the reference signal to a receiving device

Fig. 9

700

704

network
I/F

705

706

703

storage

702

memory

701

processor

Fig. 10

800

810     810                              820

                                          825

                         wireless communication
                                  I/F

                    827                        826

                    RF                         BB

                    827                        826

                    RF                         BB


                                          821

                         controller

824

                              823              822

                         network          memory
                           I/F

Fig. 11

**Fig. 12**

900

916

912

915

wireless communication I/F

914 913

RF | BB

916

915

914 913

RF | BB

906 907 908

camera | sensor | microphone

917

909

input
apparatus

911

speaker

903

storage

902

memory

901

processor

910

display
apparatus

904

external
connection
I/F

919

auxiliary
controller

918

battery

**Fig. 13**

Fig. 14

## INTERNATIONAL SEARCH REPORT

| International application No. |
| --- |
| **PCT/CN2020/074176** |

**A.    CLASSIFICATION OF SUBJECT MATTER**

H04W 72/12(2009.01)i;   H04L 5/00(2006.01)i

According to International Patent Classification (IPC) or to both national classification and IPC

**B.    FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNPAT; CNKI; WPI; EPODOC; IEEE; 3GPP: 非正交多址, NOMA, 解调, 参考, 符号, 信号, 正交, 随机, 序列, reference, signal, DMRS, demodula+, sequence, orthogonal, random

**C.    DOCUMENTS CONSIDERED TO BE RELEVANT**

| Category* | Citation of document, with indication, where appropriate, of the relevant passages | Relevant to claim No. |
| --- | --- | --- |
| X | CN 108886448 A (LG ELECTRONICS INC.) 23 November 2018 (2018-11-23) description, paragraphs [0052], [0149]-[0155], [0292]-[0396], and [0604]-[0638] | 1-23 |
| A | CN 109274472 A (HUAWEI TECHNOLOGIES CO., LTD.) 25 January 2019 (2019-01-25) entire document | 1-23 |
| A | US 2016006548 A1 (LG ELECTRONICS INC.) 07 January 2016 (2016-01-07) entire document | 1-23 |

☐ Further documents are listed in the continuation of Box C.          ☑ See patent family annex.

| | |
| --- | --- |
| * Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| **02 April 2020** | **24 April 2020** |

| Name and mailing address of the ISA/CN | Authorized officer |
| --- | --- |
| **China National Intellectual Property Administration (ISA/ CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2020/074176**

| Patent document cited in search report | | | Publication date (day/month/year) | Patent family member(s) | | | Publication date (day/month/year) |
|---|---|---|---|---|---|---|---|
| CN | 108886448 | A | 23 November 2018 | EP | 3439218 | A1 | 06 February 2019 |
| | | | | KR | 20180112862 | A | 12 October 2018 |
| | | | | WO | 2017171314 | A1 | 05 October 2017 |
| CN | 109274472 | A | 25 January 2019 | CN | 110266464 | A | 20 September 2019 |
| | | | | US | 2019288816 | A1 | 19 September 2019 |
| | | | | EP | 3522644 | A1 | 07 August 2019 |
| | | | | CN | 110266463 | A | 20 September 2019 |
| | | | | IN | 201937017006 | A | 03 January 2020 |
| | | | | WO | 2019015468 | A1 | 24 January 2019 |
| US | 2016006548 | A1 | 07 January 2016 | WO | 2014142578 | A1 | 18 September 2014 |
| | | | | CN | 105191175 | A | 23 December 2015 |
| | | | | EP | 2975783 | A1 | 20 January 2016 |
| | | | | US | 2016029371 | A1 | 28 January 2016 |
| | | | | US | 2020053726 | A1 | 13 February 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 201910106580 A